# EUROPEAN PATENT APPLICATION

(11) **EP 4 438 144 A1**
(43) Date of publication of application: **02.10.2024**
(21) Application number: 23386024.6
(22) Date of filing: 28.03.2023
(51) Int. Cl.: A63F 13/577, A63F 13/58

(54) **VIRTUAL CHARACTER MODELLING METHOD AND APPARATUS**

(71) Applicant: Sony Interactive Entertainment Inc., Tokyo 108-0075 (JP)
(72) Inventor: Michailidis, Lazaros, London, W1F 7LP (GB)
(74) Representative: D Young & Co LLP

(57) **Abstract**

A method of virtual character modelling comprises the steps of defining a damage map for all or part of a virtual character, the damage map having a form corresponding to a texture map applied to the all or part of the virtual character, with points on the damage map corresponding to points on the virtual character; assigning initial damage values to each point on the damage map; recording on the damage map damage caused by a spatial interaction of a virtual damage agent at one or more of the points on the virtual character corresponding to the points on the damage map by altering the damage values that those points; and modifying an aspect of the virtual character in response to the recorded damage.

## Description

The present invention relates to an apparatus and method of virtual character modelling.

In videogames, it is known for some antagonists to have virtual health values, which can be depleted by one or more attacks by the user to defeat them. Different attacks can have different impacts on the health value, with for example a so-called 'headshot' causing more damage than other shots in some games, or an attack having a predetermined chance of a 'critical' attack that causes greater damage. Meanwhile in other cases, the type of attack can affect the health value to a greater or lesser extent, to simulate a certain weakness / resistance by the antagonist and reward or penalise users who adopt, or fail to adopt, a responsive strategy to combatting them.

In this way, combat within games can be made varied and of more interest to players.

However, there is scope to further improve this approach.

Embodiments of the present invention see to address or mitigate this issue.

### SUMMARY OF THE INVENTION

Various aspects and features of the present invention are defined in the appended claims and within the text of the accompanying description.

In a first aspect, a method of virtual character modelling is provided in accordance with claim 1.

In another aspect, an entertainment device is provided in accordance with claim 12.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment system in accordance with embodiments of the description.
- Figure 2 is a schematic diagram of an example virtual character and environment.
- Figure 3 is a schematic diagram of a character model in accordance with embodiments of the description.
- Figure 4 is a flow diagram of a method of virtual character modelling in accordance with embodiments of the description.

### DESCRIPTION OF THE EMBODIMENTS

An apparatus and method of virtual character modelling are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

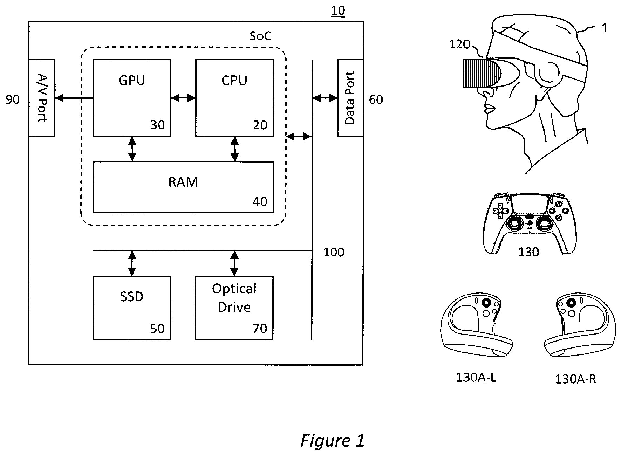

Referring now to the drawings, wherein like reference numerals designate identical or corresponding parts throughout the several views, Figure 1 shows an example of an entertainment system 10 is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD.

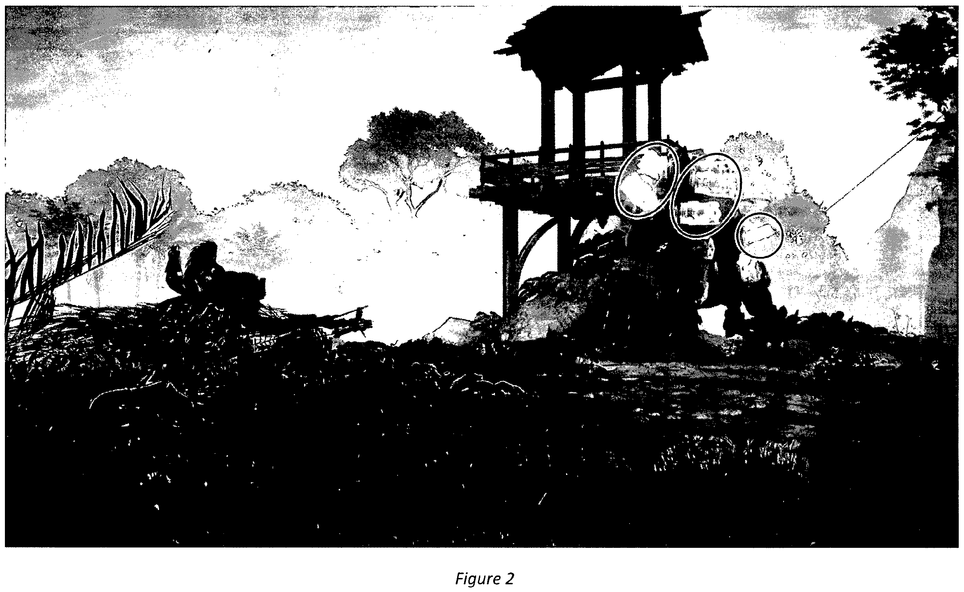

Referring now to Figure 2, typically in a game a user controls a protagonist (such as the player character pictured to the left) who may occasionally need to fight an antagonist (such as the robot pictured to the right). As noted previously, the antagonist may have a total health value which may be reduced by one or more attacks on the part of the protagonist, for example using ranged weapons such as guns, arrows or spells, or melee weapons such as swords or fists, as non-limiting examples.

Also as noted previously, such attacks may have different effects on different antagonists; for example in the Illustrated game (Horizon Zero Dawn ^{®}), different types of arrows have greater or lesser effects on the health value of different types of robots. Also as noted previously, some attacks may have a predetermined chance of a so-called critical hit or attack multiplier that serves to affect the health value of the antagonist typically to a greater extent than normal for the same attack.

Again as noted previously, some attacks may more greatly affect the health value than others depending on where the attack strikes the antagonist; for example a headshot may cause more damage than a body shot.

Finally, and as illustrated in Figure 2, specific parts of the antagonist may have their own health values; in the figure, specific parts of the robot (such as those encircled in the figure) can be separately attacked and destroyed, which in turn disables a function of the robot (such as the ability to use a particular attack or movement).

Each of these requirements upon the basic notion of a health value for the antagonist allows for greater strategy and depth to be incorporated within the specific game rules of a given game.

However, there is scope to improve upon this further or provide complementary capabilities.

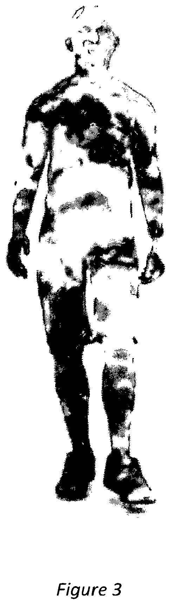

Accordingly, and referring now also to Figure 3, in embodiments of the present description, a videogame character (whether an antagonist, protagonist, or neutral non-player character) is provided with a damage map that allows for the spatial recording of cumulative damage and optionally of healing of the character during game play.

The damage map may for example take a form similar to a texture map of the character, and is updated in response to in-game events. The map need not be a texture per se, but by having a similar layout to a texture that is mapped on to the character, a similar mapping may be used to relate points on the character to points on the damage map or vice-versa, thereby enabling efficient re-use of shaders and similar code used for loading and mapping textures on to character models.

Taking an arbitrary example value of 100 to represent maximum health for each point on the damage map corresponding to the character (although for example for a greyscale damage map, a value of 8, 16, 32, 64, 128, or 256 may be more convenient to implement), then in this arrangement the overall health of the character can optionally be considered the sum of values on the damage map. Alternatively each point can represent damage, and the overall health of the character is a chosen initial value minus the sum of values on the map. Hence in the present description, references to deducting values, or adding values, may be interpreted in the reverse depending on whether the map records a loss of health or equivalently an increase in damage.

The respective points on the damage map may correspond to pixels, texels, or mesh vertices, or may correspond to sub-regions such as some or all of a respective polygon upon which the damage map may be notionally applied.

The damage map then provides a spatial record of damage to the character. In Figure 3, there is a diagonal mark across the character's chest indicating damage, and one leg also shows more damage than the other.

In this case, for example the damage across the chest may have been inflicted by a diagonal strike by a flaming sword. Meanwhile the damage to the leg may have been caused by stepping on a booby trap.

More generally, damage is recorded by the spatial interaction of a damage agent with the points on the damage map as applied to the character - put another way, damage is recorded by a spatial interaction of a damage agent with the points on the character that correspond to points on the damage map, for example according to how the damage map would be applied if it were a texture.

The damage agent can be a virtual object such as a sword swung at the character, or can be a notional object (for example a bullet may not exist within the virtual world but may simply be a notional projection from a gun to a target at the point of firing), or could be environmental, such as a surface treated as being lava. The damage agent can also have an area effect such as for a fireball, and/or may have its own damage pattern that may be a function of an animation sequence or a procedural / physics simulation. For example splash damage in a 'paintball' game may be applied as one of a series of predetermined 'splat' patterns chosen in sequence or randomly, or may be based on a simulation of the paint hitting the character (or hitting a surface nearby and splashing on to them). This may also apply e.g. to explosions that hit the character or hit near the character.

Hence optionally the spatial interaction can be precise, e.g. an intersection of damage agent mesh and character mesh for example to record a clean cut by a sword; or may include an area effect such that the point of intersection (or nearest approach) of the damage corresponds to the peak damage, with lesser damage radiating out, and/or is the locus of a damage pattern (such as a fire pattern as illustrated in Figure 3) - or similarly the spatial interaction is computed based on a notional locus (e.g. a point locus) of the damage agent and an associated area effect and/or pattern - for example a fireball passing close by the character may thus result in cumulative effects as the volume of the fireball's area effect moves past the character (potentially while the character themselves is also moving). It will be appreciated that the resulting damage pattern may accurately reflect the dynamic interaction of the character and damage agent in this manner.

Different damage agents may persist in time to a greater or lesser extent (e.g. a fireball or a sword), or may be instant (like a bullet); or may be a combination of the two (for example a sword may only be able to cause damage during specific attack animations, but not when held passively or used to block). Similarly the sampling of damage may vary for different damage agents; for a bullet the damage may be a single update to the damage map. Meanwhile for the fireball the update may be per image frame during interaction, or per Nth frame, or may be a function of relative speed between damage agent and character for example to model a rate of damage transfer over time. Again some damage agents may employ a mix of such approaches; for example a sword intersecting with the character may record damage for as long as it intersects with the character, but only for newly intersected points as the sword moves.

Thus damage may be applied to the damage map according to any suitable interaction (intersection, area effect, and/or pattern) associated with the damage agent or agents, whether on a predetermined (e.g. fixed, cyclic, random, or selection) basis, or using physics simulations or other procedural schemes, typically as the damage agent(s) interact with the character itself and this is then mapped back to the damage map as described elsewhere herein. These interactions can be thought of in one sense as akin to paint brushes, sprays, and stamps applying colour to a canvas, with the distinction that the application deducts value from the canvas of the damage map at the relevant points.

In this way a precise model of character damage can be achieved, and furthermore a precise model of cumulative damage, as successive applied damage deducts from the existing values on the damage map. Hence for example two different sword swings will result in greater cumulative damage where they intersect on the target character.

Optionally, the deduction of value from the map need not be linear. Hence for example a weighting scheme may be applied to received damage to model different properties of the character.

For example if the character was a rhinoceros, the weighting may take the form 0.2 for values of 95 and above, 1 for values 10 to 95, and 0.2 for values from 1 to 10. This would model a tough skin (requiring 5x initial damage) then conventional damage, and then a critical vitality bonus for very low health (e.g. tough bones) that may also give the user a bit more time to escape or take a restorative potion. It will be appreciated that such a weighting scheme may have different weights for each damage value.

Optionally a weighting map may be used. Such a map may for example use RGB values to specify three different weights at predetermined threshold damage values, or three different threshold damage values for predetermined weights, or may use a greyscale map to set an overall weighting for corresponding points on the damage map, for example to indicate points of vulnerability. Other • implementations of a weighting map may also be apparent to the skilled person, such as the map values (e.g. from 0 to 100) acting as pointers to up to 100 different weighting values, or even 100 different weighting schemes - which in turn apply weightings values according to the damage map values.

In this way, any combination of health and resistance to damage can be modelled simply and precisely for the character.

Furthermore, the map need not be initialised with uniform values; areas of high and low health / vitality may differ for different in-game character classes, skill levels and the like.

Likewise, different clothing, armour, or equipment may have different damage maps and/or weight maps. For example, equipping suit of armour may add to of replace existing values in the damage map for the relevant area with damage map values specific to the armour. For example a damage map corresponding to the armour texture may be used in place of the current damage map, to reflect the different physical model of the character in the game when wearing that armour. Meanwhile some or all of the damage values of the replaced map may be copied to the armour map (or warped / mapped across using a spatial transform). Alternatively the armour map may be separate and e.g. mean that damage only reaches the character damage map when and where the armour damage map is reduced to a threshold value (e.g. zero). Again the damage and/or weighting map allows for precise definitions of strength and weakness, for example allowing a skilled opponent to target specific points in the armour to inflict greater damage as a function of the map layout.

As noted above it is likely that the damage map changes layout with the new model. In this case optionally the original map (or part thereof) can be stored if it is not still in use, to be returned if the relevant item is re-equipped. In this way, damage to different armour and the like can be preserved even when it is not equipped.

In cases where a game allows equipping of one type of armour for protection but another type for aesthetics (e.g. the user likes the look of one piece of armour but is allowed to use the stats of another stronger piece) then optionally the map of the stronger piece may be warped / mapped across using a spatial transform to conform to the shape of the visible piece, so that damage appears consistent with what is shown to the user.

In a corresponding manner to inflicting damage, optionally it is similarly possible to bestow health. As with conventional approaches, a health potion or medical pack may apply a global boost to the values on the health map, but alternatively bandages or healing spells could be applied to specific areas, in a similar manner to damage, e.g. with precise, area, or patterned effects, as non-limiting examples.

The damage map can also be used to efficiently modify the appearance of the character. The map can be used for example to drive or modify, or as, a deformation or displacement map to show denting in armour or other physical damage, or similarly for a bump map or normal map; it can be used as a map of alpha or transparency values to control visibility of a damaged version of the character texture, or similarly a map of blend values to show the extent to blend two textures or models, e.g. from complete heath to complete damage.

Hence for example the map could be used simultaneously to show a cut or shotgun blast as a furrow or dent in the character according to the values on the map, and also blend in a flesh/blood texture depending on the level of values, so that the character automatically appears to have a wound that perfectly reflects the damage inflicted, and does so in a very computationally efficient manner - which is beneficial in video games where maintaining a (high) frame rate is generally considered important.

It will be appreciated that different textures or models could be used for different subranges of the damage map values, so that for example the damage values, reflected in the depth of the deformation, reveal first muscle and then bone using pixels / texels from different textures responsive to the damage value at the corresponding points on the damage map.

Hence more generally at least a first aspect (e.g. mesh deformation or equivalently bump mapping or any other suitable deformation process, and/or mesh transparency, blending and/or selection) of the game element (e.g. a character) may be modified responsive to values of the damage map, the value at a given position on the damage map affecting the at least a first aspect at the corresponding position on at least a first part of the game element.

The above general mechanism provides a means for accurately measuring the state of an in-game element such as a character, in particular for recording cumulative damage and optionally healing, and also optionally for accurately and efficiently displaying that state through optional deformation and texture blending and/or selection.

However it will be appreciated that this mechanism in itself is not a rule for playing a game; recording damage and optionally efficiently displaying it has no bearing on how that information is used in a specific game.

By contrast, rules that may exploit such a capability may include how the character responds to the damage; for example changes to animations, capabilities, and the notional life of the character may be made depending on local, regional, or global total values.

The accurate nature of the damage allows for new strategies; for example if a player avatar holds a shield in their left hand and a sword in their right, they may accrue damage on their right side; in order to avoid reaching a critical level of damage, they may swap the shield over to their right hand - but then lose some hit points for wielding their sword in their left had to reflect a notional handedness of the character. Similarly for example in multiplayer games different play styles may result in characteristic patterns of damage for opponents that skilled players can learn to exploit.

Likewise, users may be able to apply scarce healing materials more strategically, prioritising key regions or areas of high damage. Meanwhile materials to apply buffs or weaknesses can similarly be applied in a more targeted fashion, by modifying the damage map (e.g. the maximum value) and/or weightings in a similar manner to damage or healing.

Likewise, how the damage or healing is inflicted is typically a game choice - for example the level of damage from a given sword, or whether a potion provides instant healing or increases (heals) damage values over a period of time.

Effects of localized damage could range from simple command restrictions (such as slower walking or inability to lift arm if the corresponding limbs are affected) to more intricate effects, such as forgetfulness of or higher reaction times to the player's commands when there is a threshold level of damage or damage to a particular area (e.g. the head).

It will be appreciated that multiple damage maps may be used simultaneously to reflect different types of damage, if required, and these may drive separate responses in the character and/or different graphical modifications, or be combined in any suitable manner to generate and overall effect.

For example a first damage map may model physical damage as described previously herein, whilst another map may model stamina; for example user's arms may lose stamina with sword strikes or when receiving blows, and the like. The stamina map may then be used to affect the amount of damage taken on the damage map (e.g. the stamina map is used to drive a weighting of the damage map) - clearly a converse effect could be envisioned, where damage reduced stamina. Another map may relate to magical damage (or magical potency) and interact with one or more of the other two in a similar way. Alternatively different aspects of the character's physiology could be mapped separately, such as skeletal, muscular, and neural, with different health values, strengths, and/or weaknesses. For example a loud noise or other adverse environmental elements may damage the neural map and this may affect character response times or accuracy. Meanwhile a muscle map may be a function of stamina, and a skeletal map a function of melee damage.

Optionally in this case the maps may be combined, for example as an RGB-texture type data set with respective maps in respective colour channels, for efficient manipulation by memory, CPU, and/or GPU as applicable. Similarly a single map could occupy one colour channel of such a data set.

The general mechanism described herein may optionally interact with traditional damage models, such as so-called hit boxes and hurt boxes, which are notional volumes of space around a character or part thereof which act as a proxy for the character when determining if a hit hurts a character. In essence, if a hit box intersects with a hurt box then it counts as a hit that does some form of damage.

In cooperation with the techniques herein, a hitbox could be treated as the damage agent and could intersect with the character directly in a similar manner to the sword described previously herein, or have an associated area or pattern effect. Optionally a hitbox could be used to define an area effect associated with an object. Meanwhile if (for example for compatibility reasons) the character also had a hurtbox, then the damage attributed to the hurtbox could be applied evenly to the damage map (or the part of the damage map corresponding to the hurtbox).

However, it will be appreciated that beneficially the present technique does not require hurtboxes and typically does not use hitboxes either, providing a much more accurate register of current damage or other effects (such as stamina, magic potency or the like as described elsewhere herein). In particular, because the damage map can be related to the character in a similar manner to a texture, the precise location of a point on the character corresponding to a point on the damage map can be calculated e.g. during complex animations or physics simulations, and for arbitrary interactions other objects or characters in or of the environment, so that precise damage (and optionally healing) can be recorded in a manner not possible with conventional hurtboxes.

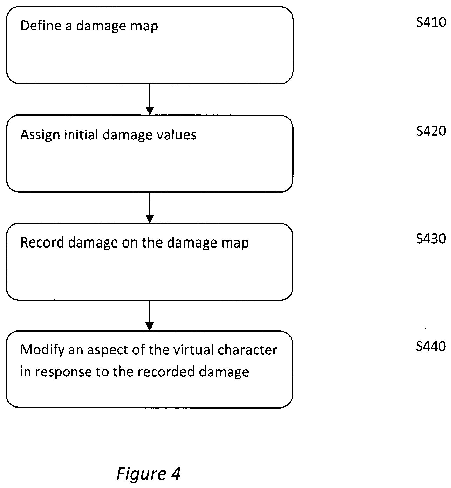

Turning now to Figure 4, in a summary embodiment of the present description, a method of virtual character modelling (e.g. within a virtual environment) comprises the following steps.

In a first step s410, defining a damage map for all or part of a virtual character, the damage map having a form corresponding to a texture map applied to the all or part of the virtual character, with points on the damage map corresponding to points on the virtual character, as described elsewhere herein.

In a second step s420, assigning initial damage values to each point on the damage map, as described elsewhere herein. It will be appreciated that this step may be inherent in the damage map itself (e.g. typically the map will be pre-initialised with values, much as a texture comprises relevant values).

In a third step s430, recording on the damage map damage caused by a spatial interaction of a virtual damage agent at one or more of the points on the virtual character corresponding to the points on the damage map by altering the damage values that those points, as described elsewhere herein; and In a fourth step s440, modifying an aspect of the virtual character in response to the recorded damage, as described elsewhere herein.

It will be apparent to a person skilled in the art that variations in the above method corresponding to operation of the various embodiments of the apparatus as described and claimed herein are considered within the scope of the present invention, including but not limited to that:
- the spatial interaction may comprise one or more selected from the list consisting of an intersection by the virtual character with at least part of the virtual damage agent, an intersection by the virtual character with at least part of an area effect associated with the virtual damage agent, an intersection by the virtual character with at least part of a damage pattern associated with the virtual damage agent, and an intersection by the virtual character with at least part of a hit box associated with the virtual damage agent, as described elsewhere herein;
- the spatial interaction may comprise one or more selected from the list consisting of a predetermined interaction, one of a selection of interactions, and a simulated interaction, as described elsewhere herein;
- a point on the damage map may correspond to one selected from the list consisting of i. a respective pixel of the virtual character, a respective texel of the virtual character, a respective vertex of the virtual character mesh, and all or part of a respective polygon of the virtual character mesh, as described elsewhere herein;
   - which the step of recording damage on the damage map comprises modifying the damage value at a point on the damage map to an extent responsive to a weighting that in turn is responsive to the current damage value at that point, as described elsewhere herein;
- the method comprises the step of defining a weighting map for all or part of a virtual character, the weighting map having a form corresponding to a texture map applied to the all or part of the virtual character, with points on the weighting map corresponding to points on the damage map, and the step of recording damage on the damage map comprises modifying the damage value at a respective point on the damage map to an extent responsive to a corresponding weighting indicated by the weighting map, as described elsewhere herein;
   - the method comprises the step of changing the damage map in response to a change to the shape of the character model, as described elsewhere herein;
   - the method comprises the step of recording on the damage map healing at one or more of the points on the virtual character corresponding to the points on the damage map by altering the damage values that those points, as described elsewhere herein;
- the step of modifying an aspect of the virtual character in response to the recorded damage comprises one or more selected from the list consisting of modifying a displacement map, modifying a bump map, modifying a normal map, modifying a transparency map, and modifying a blend map, for the character responsive to the values of the damage map, as described elsewhere herein; and
- two of more damage maps for a character may be defined in respective colour channels of a data structure corresponding to a texture map applied to the all or part of the virtual character, as described elsewhere herein (optionally these maps may track other properties of the character such as stamina, or track different types of damage).

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in another summary embodiment of the present description, an entertainment device 10 (such as a PlayStation 4 or 5, or a PC, tablet, phone, HMD, smart TV or any suitable device), comprises the following.

A graphics processor (for example GPU 30, optionally in combination with CPU 20) configured (for example by suitable software instruction) to generate a virtual character in a virtual environment, as described elsewhere herein;
a damage processor (for example CPU 20, optionally in combination with GPU 30) configured (for example by suitable software instruction) to define a damage map for all or part of the virtual character, the damage map having a form corresponding to a texture map applied to the all or part of the virtual character, with points on the damage map corresponding to points on the virtual character, as described elsewhere herein;
the damage processor being configured (for example by suitable software instruction) to assign initial damage values to each point on the damage map, as described elsewhere herein (again, noting that the values may be pre-assigned as the provided values of the map, and so in this sense the damage process or is merely loading the map values or making them available for access);
the damage processor being configured (for example by suitable software instruction) to record on the damage map damage caused by a spatial interaction of a virtual damage agent at one or more of the points on the virtual character corresponding to the points on the damage map by altering the damage values that those points, as described elsewhere herein; and
a modification processor (for example GPU 30, optionally in combination with CPU 20) configured (for example by suitable software instruction) to modify an aspect of the virtual character in response to the recorded damage.

Instances of this summary embodiment implementing the methods and techniques described herein (for example by use of suitable software instruction) are envisaged within the scope of the application, including but not limited to that:
- the spatial interaction comprises one or more selected from the list consisting of an intersection by the virtual character with at least part of the virtual damage agent, an intersection by the virtual character with at least part of an area effect associated with the virtual damage agent, an intersection by the virtual character with at least part of a damage pattern associated with the virtual damage agent, and an intersection by the virtual character with at least part of a hit box associated with the virtual damage agent, as described elsewhere herein;
- the modification processor is configured to modify one or more selected from the list consisting of a displacement map, a bump map, a normal map, a transparency map, and a blend map, for the character responsive to the values of the damage map, as described elsewhere herein; and
- two of more damage maps for a character may be defined in respective colour channels of a data structure corresponding to a texture map applied to the all or part of the virtual character, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of virtual character modelling, comprising the steps of:
defining a damage map for all or part of a virtual character, the damage map having a form corresponding to a texture map applied to the all or part of the virtual character, with points on the damage map corresponding to points on the virtual character;
assigning initial damage values to each point on the damage map;
recording on the damage map damage caused by a spatial interaction of a virtual damage agent at one or more of the points on the virtual character corresponding to the points on the damage map by altering the damage values that those points; and
modifying an aspect of the virtual character in response to the recorded damage.

2. The method of claim 1, in which the spatial interaction comprises one or more selected from the list consisting of:
i. an intersection by the virtual character with at least part of the virtual damage agent;
ii. an intersection by the virtual character with at least part of an area effect associated with the virtual damage agent;
iii. an intersection by the virtual character with at least part of a damage pattern associated with the virtual damage agent; and
iv. an intersection by the virtual character with at least part of a hit box associated with the virtual damage agent.

3. The method of claim 1 or claim 2, in which the spatial interaction comprises one or more selected from the list consisting of:
i. a predetermined interaction;
ii. one of a selection of interactions; and
iii. a simulated interaction.

4. The method of any preceding claim in which a point on the damage map corresponds to one selected from the list consisting of:
i. a respective pixel of the virtual character;
ii. a respective texel of the virtual character;
iii. a respective vertex of the virtual character mesh; and
iii. all or part of a respective polygon of the virtual character mesh.

5. The method of any preceding claim in which the step of recording damage on the damage map comprises modifying the damage value at a point on the damage map to an extent responsive to a weighting that in turn is responsive to the current damage value at that point.

6. The method of any preceding claim, comprising the step of
defining a weighting map for all or part of a virtual character, the weighting map having a form corresponding to a texture map applied to the all or part of the virtual character, with points on the weighting map corresponding to points on the damage map; and
the step of recording damage on the damage map comprises modifying the damage value at a respective point on the damage map to an extent responsive to a corresponding weighting indicated by the weighting map.

7. The method of any preceding claim, comprising the step of:
changing the damage map in response to a change to the shape of the character model.

8. The method of any preceding claim, comprising the step of:
recording on the damage map healing at one or more of the points on the virtual character corresponding to the points on the damage map by altering the damage values that those points.

9. The method of any preceding claim, in which the step of modifying an aspect of the virtual character in response to the recorded damage comprises one or more selected from the list consisting of:
i. modifying a displacement map;
ii. modifying a bump map;
iii. modifying a normal map;
iv. modifying a transparency map; and
v. modifying a blend map;
for the character responsive to the values of the damage map.

10. The method of any preceding claim, in which two of more damage maps for a character are defined in respective colour channels of a data structure corresponding to a texture map applied to the all or part of the virtual character.

11. A computer program comprising computer executable instructions adapted to cause a computer system to perform the method of any one of the preceding claims.

12. An entertainment device, comprising
a graphics processor for generating a virtual character in a virtual environment;
a damage processor configured to define a damage map for all or part of the virtual character, the damage map having a form corresponding to a texture map applied to the all or part of the virtual character, with points on the damage map corresponding to points on the virtual character;
the damage processor being configured to assign initial damage values to each point on the damage map;
the damage processor being configured to record on the damage map damage caused by a spatial interaction of a virtual damage agent at one or more of the points on the virtual character corresponding to the points on the damage map by altering the damage values that those points; and
a modification processor configured to modify an aspect of the virtual character in response to the recorded damage.

13. The entertainment device of claim 13, in which the spatial interaction comprises one or more selected from the list consisting of:
i. an intersection by the virtual character with at least part of the virtual damage agent;
ii. an intersection by the virtual character with at least part of an area effect associated with the virtual damage agent;
iii. an intersection by the virtual character with at least part of a damage pattern associated with the virtual damage agent; and
iv. an intersection by the virtual character with at least part of a hit box associated with the virtual damage agent.

14. The entertainment device of claim 12 or claim 13, in which the modification processor is configured to modify one or more selected from the list consisting of:
i. a displacement map;
ii. a bump map;
iii. a normal map;
iv. a transparency map; and
v. a blend map;
for the character responsive to the values of the damage map.

15. The entertainment device of any one of claims 12 to 14, in which two of more damage maps for a character are defined in respective colour channels of a data structure corresponding to a texture map applied to the all or part of the virtual character.
